# EUROPÄISCHE PATENTANMELDUNG

(11) **EP 4 020 341 A1**
(43) Veröffentlichungstag der Anmeldung: **29.06.2022**
(21) Anmeldenummer: 20216867.0
(22) Anmeldetag: 23.12.2020
(51) Int. Cl.: G06Q 10/00

(54) **SYSTEM FÜR DIE ECHTHEITSPRÜFUNG VON PRODUKTEN**

(71) Anmelder: Red Bull GmbH, 5330 Fuschl am See (AT)
(72) Erfinder: MAYRHUBER, Harald, 5330 Fuschl am See (AT); NACHBAGAUER, Josef, 5330 Fuschl am See (AT); CONCIN, Roland, 5330 Fuschl am See (AT)
(74) Vertreter: Burger, Hannes

(57) **Zusammenfassung**

Die Erfindung betrifft ein System für die Echtheitsprüfung eines Produktes (2), gemäß welchem das Produkt (2) mit einer Kennzeichnung (3) versehen ist, deren Information durch einen Detektor (6, 16, 20) ausgelesen wird und über ein Informationsnetzwerk (8) an eine Datenbank (9) gesandt wird und mit dort hinterlegten Informationen abgeglichen wird, wobei als ein Ergebnis des Abgleichs eine Entscheidung bezüglich Echtheit oder Unechtheit des Produktes (2) generiert wird und das Ergebnis dieser Entscheidung am Ort des Produktes (2) signalisiert wird. Das Produkt (2) ist ein verpacktes Lebensmittel und der Detektor (6, 20) ist in einem Kühlschrank (1) angeordnet, in welchem das Produkt (2) platziert ist.

## Beschreibung

Die Erfindung betrifft ein System für die Echtheitsprüfung von Produkten.

Insbesondere bei Produkten, welche von einem Erstanbieter aus in mehreren Stufen von jeweiligen Anbietern zu jeweiligen Abnehmern weitergegeben werden, besteht seitens allen rechtmäßig Beteiligten der Wunsch, überprüfen zu können, ob das jeweils aktuell vorliegende Produkt auch tatsächlich von dem angegebenen Erstanbieter stammt und nicht eine Fälschung darstellt. Klassischerweise wurden dazu Produkte - vor allem Produktverpackungen - mit zumindest einem Zusatzmerkmal ausgestattet, welches nicht auffällig ist, dessen Vorhandensein für Wissende aber doch überprüfbar und welches nach Möglichkeit nicht ganz einfach zu kopieren ist.

Seit mehreren Jahren werden vermehrt Verfahren vorgeschlagen, bei denen zur Echtheitsprüfung elektronische Datenverarbeitung, oftmals in Kombination mit digitaler Datenübertragung über ein Datenübertragungsnetz, angewandt wird. Dazu mehrere Beispiele:
Gemäß der EP 2862131 A1 wird eine Ware mit zwei Identifizierungsmerkmalen versehen, wovon das eine Merkmal offensichtlich lesbar ist (beispielsweise ein QR-Code) und das zweite Merkmal ein nicht offensichtlich lesbares aber eindeutiges Merkmal ist, beispielsweise ein Farbengewirr, bei welchem die letztendlich bedeutende Information in der Anordnung von wenigen Farbpunkten in einem engen, unauffälligen Farbspektrum liegt und aus einem speziellen Blickwinkel heraus gelesen werden muss. Das Auslesen der Merkmale erfolgt mittels eines speziellen Lesegerätes. Zum Nachweis der Echtheit der Ware muss die aus dem offensichtlich lesbaren Merkmal gewonnene Information mit der richtig gelesenen Information aus dem nicht offensichtlich lesbaren Merkmal zusammenpassen.

In der EP 2894596 A1 wird vorgeschlagen, Ware (bzw. eine Warenverpackung) mit einem eindeutigen Identifikationsmerkmal auszustatten, welches in einer Datenbank registriert ist, sowie mobile Geräte (z.B. Smartphones) vorzusehen, durch welche an der Ware das Identifikationsmerkmal gelesen werden kann und einschließlich Information über den geografischen Ort, an welchem das Lesen stattfindet, an die Datenbank gesandt wird. In der Datenbank werden die Daten bezüglich des Ortes des Produktes zum betreffenden Zeitpunkt notiert und anhand von Informationen, die in der Datenbank zu dem Identifizierungsmerkmal hinterlegt sind, wird überprüft, ob der angegebene Ort des Lesens für die betreffende Ware plausibel ist oder nicht, und dementsprechend darauf geschlossen, ob die Ware echt ist oder nicht.

Gemäß den Schriften EP 2990988 A1, EP 3154015 A1, EP 3179441 A1, EP 3189465 A1 EP 3510527 A1, EP 3564840 A1 wird eine Ware jeweils mit (mindestens) zwei lesbaren Merkmalen ausgestattet, wobei ein Merkmal offensichtlich und leicht lesbar ist und das zweite Merkmal nicht ohne weiteres lesbar und eventuell auch nicht ohne weiteres bemerkbar ist, und wobei die Information aus beiden Merkmalen als zusammengehörig in einer Datenbank hinterlegt sind. Zur Überprüfung einer Ware werden die von einem Lesegerät festgestellten beiden Informationen an die Datenbank gesandt und diese meldet zurück, ob die beiden Informationen zusammengehören, was bedeutet, dass die Ware echt ist, oder ob dem nicht so ist.

An jenen bislang vorgeschlagenen Echtheits-Überprüfungsverfahren, welche auslesbare Merkmale und elektronische Datenverarbeitung anwenden, ist nachteilig, dass sie individuell durch Menschen initiierte Überprüfungsvorgänge und das Hantieren mit separaten Lesegeräten erfordern. Die Höhe des damit verbundenen Aufwandes führt letztendlich dazu, dass die Überprüfungsverfahren nur an einem störend kleinen Anteil von Waren als wirksames Mittel gegen Produktfälschung wirklich angewandt werden.

Durch die JP 2001208463 A wird schon im Jahr 2001 öffentlich vorgeschlagen, einen Kühlschrank mit elektronischen Kameras für seinen Innenraum auszustatten, sowie mit Software und Datennetzanschlüssen, um aus den von den Kameras erstellten Bildaufnahmen durch automatisierte Bilderkennung die im Kühlschrank gelagerten Güter zu identifizieren und diese Information automatisiert einer ggf. auch weit entfernt befindlichen berechtigten Person bereitzustellen, damit diese weiß, was einzukaufen ist oder gekocht werden kann.

Auf die JP 2001208463 A folgend gibt es eine Vielzahl von Patentveröffentlichungen, welche auf der gleichen Grundidee aufbauen und sich zu dieser in Teilthemen vertiefen, wie z.B. Anordnungen der Kameras, Herbeischaffung des Hintergrundwissens für die Identifikation, Details der Bildverarbeitung, Erstellung von Vorschlägen für die Verwendung des Inhalts ("Diätratgeber"), Frischewarnmeldungen etc. Beispielhaft sei dazu auf die Schriften CN 103604271 A, CN 104361041 B, CN 105758108 A, CN 106247752 A, CN 106642976 A, CN 106642981 A, CN 109114877 A, CN 206817873 U, CN 208704296 U, TW 201816737 A, US 2018245840 A1, US 2019226755 A1, US 9784497 B2, WO 2015024841 A1 und WO 2018142022 A1 hingewiesen.

Für die Hersteller und Lieferanten von Waren, mit denen ein derartig ausgestatteter Kühlschrank zu befüllen ist, blieb das Thema "automatische Erstellung und Bereitstellung von Informationen über den Inhalt eines Kühlschranks" bislang ohne Nutzen. Scheinbar haben sich jene Fachleute, welche derartige Kühlschränke entwickeln, immer nur auf jene Marktteilnehmer hin ausgerichtet, welche zu kühlende Waren verbrauchen, und nicht auch auf jene, welche diese Waren anbieten.

Die der Erfindung zu Grunde liegende Hauptaufgabe besteht darin, jenen Zusatzaufwand zu vermindern, der bei Abnehmern von Produkten dann anfällt, wenn sie die Echtheit von Produkten überprüfen wollen. Weiters sollen bei einem höheren Anteil von bei Abnehmern ankommenden Produkten als dies bisher der Fall ist, eine Echtheitsprüfung durchgeführt werden und Informationen über die Position des Produktes zum jeweiligen Zeitpunkt an berechtigte Lieferanten oder Hersteller gesandt werden.

Die hier vorgeschlagene Lösung der Aufgabe beschränkt sich auf verpackte Lebensmittel, welche in Kühlschränken aufzubewahren sind. Auslösend für die Erfindung ist die Kombination der Erkenntnisse, dass für derartige Produkte der erzielbare Wissensgewinn besonders wertvoll ist, und dass die technische Umsetzung der Lösung überraschend einfach möglich ist.

Erfindungsgemäß wird zu diesen Produkten vorgeschlagen, die vor Ort erforderlichen Mittel für die Echtheitsprüfung der Produkte und die vor Ort erforderlichen Mittel für die Beschaffung der an eine Datenbank (- des Warenanbieters -) zu sendenden Information über die Produkte in jenen Kühlschränken anzubringen, in welchen die Produkte aufzubewahren sind, und die für die genannten Zwecke vor Ort durchzuführenden Verfahrensschritte auch automatisiert im Kühlschrank durchzuführen. ("Im Kühlschrank" bedeutet in diesem Zusammenhang, dass die besagten Mittel Teil jenes Gerätes sind, welches auch den Kühlraum für die Produkte und die Aggregate für die Kühlung umfasst.)

Ein besonderer Vorteil der vorgeschlagenen Lösung besteht darin, dass die Mittel zur Realisierung in jenen bekannten Kühlschränken, welche die Kühlschrankbenutzer automatisiert über den Kühlschrankinhalt informieren, überwiegend schon vorhanden sind. Damit ist sehr wenig Zusatzaufwand erforderlich, um diese Kühlschränke auch erfindungsgemäß zu nutzen, und es kann in hohem Maß auf bestehende Entwicklungen und bestehendes Know-how aufgebaut werden.

Die Erfindung wird an Hand stilisierter Zeichnungen zu beispielhaften Ausführungsvarianten veranschaulicht und näher erläutert:
- Fig. 1:: ist eine schematische Darstellung von für das beispielhafte Verwirklichen der Erfindung wesentlichen Elementen.
- Fig. 2:: zeigt in seitlicher Schnittansicht einen Ausschnitt eines beispielhaften erfindungsgemäß ausgestatteten Kühlschranks.
- Fig. 3:: zeigt eine schematische Darstellung von für das beispielhafte Verwirklichen der Erfindung wesentlichen Elementen, wenn die Erfindung mit einer Vorrichtung für die Rücknahme von Verpackungen kombiniert wird.
- Fig. 4:: zeigt eine stilisierte Darstellung eines speziellen, erfindungsgemäß verwendbaren Regalfachs in seitlicher Teilschnittansicht.
- Fig. 5:: zeigt das Regalfach von Fig. 4 auch etwas stilisiert von oben.

Ein System zur Echtheitsprüfung eines Produktes umfasst zumindest einen Kühlschrank, ein mit einer Kennzeichnung versehenes Produkt, einen in dem Kühlschrank angeordneten Detektor zum Erfassen der Kennzeichnung sowie zumindest eine Information über das Produkt enthaltende Datenbank.

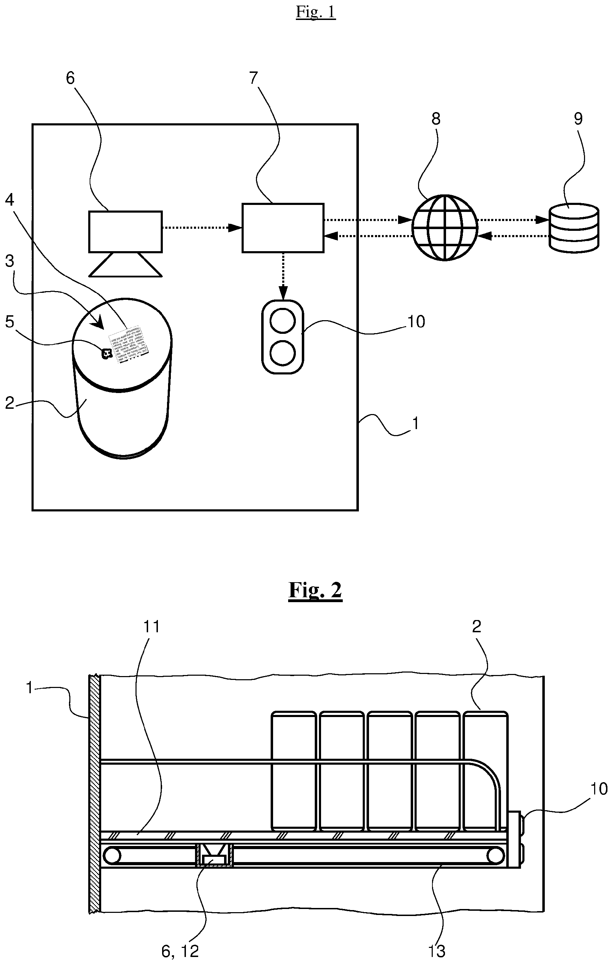

Fig. 1 symbolisiert unter anderem einen Kühlschrank 1, in dessen Kühlbereich sich ein Produkt 2 befindet, welches typischerweise aus einem Lebensmittel und einer diese umhüllende Verpackung besteht. Das Produkt 2 ist mit einer Kennzeichnung 3 versehen, welche beispielhaft aus einem offensichtlichen Kennzeichnungselement 4 (typischerweise einem QR-Code) und einem verschlüsselten Kennzeichnungselement 5 besteht.

Die Kennzeichnung 3 ist auf das Produkt 2 aufgebracht. Das Aufbringen der Kennzeichnung kann beispielsweise während des Produktionsprozesses erfolgen.

Das Produkt 2 kann typischerweise eine Getränkedose sein und der Kühlschrank 1 kann typischerweise in einer Lokalität stehen, von welcher Endverbraucher das Produkt 2 erhalten können.

Im Kühlschrank 1 befindet sich weiters ein Detektor 6 - typischerweise eine Kamera -, welcher dazu in der Lage ist, jene physikalischen Eigenschaften, welche die relevante Information der Kennzeichnung 3 bedeuten, zu detektieren. Im oder am Kühlschrank 1 befindet sich eine lokale Steuerungs- und Kommunikationseinheit 7, welche die vom Detektor 6 detektierte Information empfängt und diese einschließlich einer Identifikationsinformation für die Steuerungs- und Kommunikationseinheit 7 selbst, in Form von digitalen Daten, über ein Informationsnetzwerk 8 an eine Datenbank 9 sendet, welche auch weit entfernt von Kühlschrank 1 stehen kann. Das Informationsnetzwerk 8 ist typischerweise das Internet, zu welchem in dieser Beschreibung auch die erforderlichen lokalen Verbindungsknoten zugezählt werden.
Inhaber der Datenbank 9 ist typischerweise eine in der Lieferkette für das Produkt 2 weit oben befindliche zentrale Institution, wie beispielsweise der Hersteller des Produktes 2 oder ein Großhändler für das Produkt 2.

Die Datenbank 9 ist spätestens bei der Auslieferung von Produkten 2 von zentralen Stellen der Lieferkette weg an nachfolgende Stellen der Lieferkette mit Daten bezüglich der einzelnen Einheiten des Produktes 2 (z.B. der einzelnen Getränkedosen) gespeist worden. Ein Datensatz, welcher das Produkt 2 betrifft, beinhaltet zumindest Angaben über die Art des Produktes und die aus der Kennzeichnung 3 auf der Produktverpackung ablesbare Information, vorzugsweise auch Informationen über Zeiten zu Herstellung und Auslieferung und zum Distributionskanal.

Nachdem die Datenbank 9 von einer individuellen Steuerungs- und Kommunikationseinheit 7 eine aus einer Kennzeichnung 3 an einem Produkt 2 gelesene kennzeichnende Information zugesandt bekommen hat, gleicht sie diese Information mit ggf. schon vorliegenden Informationen zu der erhaltenen kennzeichnenden Information ab und sendet über das Informationsnetzwerk 8 Information an die Kommunikationseinheit 7 zurück, durch welche die Echtheit des Produktes 2 entweder bestätigt oder verneint wird.
Im Detail gibt es bekanntermaßen - und wie eingangs an Hand des Standes der Technik beispielhaft erwähnt - viele verschiedene bekannte Methoden der Echtheitsprüfung.
Gemäß dem in Fig. 1 skizzierten optionalen Beispiel umfasst die Kennzeichnung 3 ein offensichtliches - also leicht zu erkennendes und auch leicht zu fälschendes - Kennzeichnungselement 4 und ein verschlüsseltes Kennzeichnungselement 5, wobei das verschlüsselte Kennzeichnungselement 5 schwierig zu fälschen ist und bei welchem Außenstehenden zumeist nicht einmal klar ist, in welchen physikalischen Eigenschaften die relevante kennzeichnende Information liegt. In der Datenbank 9 sind der Inhalt des offensichtlichen Kennzeichnungselementes 4 und der Inhalt des verschlüsselten Kennzeichnungselementes 5 als zusammengehörig hinterlegt. Wenn aus den von der Steuerungs- und Kommunikationseinheit 7 an die Datenbank 9 gesandten Information durch die Datenbank 9 erkennbar ist, dass der Inhalt des offensichtlichen Kennzeichnungselementes 4 und der Inhalt des verschlüsselten Kennzeichnungselementes 5 mit diesbezüglichen Inhalten eines hinterlegten Datensatzes übereinstimmen, ist dies ein Hinweis auf die Echtheit des Produktes 2, sodass die Echtheit bestätigt werden kann. Im gegenteiligen Fall ist das ein Hinweis darauf, dass das Produkt 2 eine Fälschung ist. Zusätzlich zur Echtheitsbestätigung bzw. Verneinung derselben am Ort des Produktes wird Nutzen generiert, indem in der Datenbank 9 gespeichert wird, von welcher Steuerungs- und Kommunikationseinheit 7 aus - und damit von welchem Kühlschrank 1 aus -, das Vorhandensein eines bestimmten Produktes gemeldet wird. Damit lässt sich überwachen, wann welche Produkte wo ankommen und wann sie von dort wieder wegkommen. Diese Information, welche praktisch ohne Zusatzaufwand als Nebeneffekt anfällt, ist für die Kontrolle und Optimierung von Logistik und Vertriebsstrukturen sehr wertvoll.

Nachdem die von der Datenbank 9 stammende, die Echtheit des Produktes 2 bestätigende Information bei der Steuerungs- und Kommunikationseinheit 7 im bzw. am Kühlschrank 1 angekommen ist, schaltet diese dementsprechend ein in bzw. am Kühlschrank 1 befindliches Signalelement 10 auf "Echtheit bestätigt" oder z.B. "Echtheit kann nicht bestätigt werden". In einem einfachen Fall kann dieses Signalisieren durch ein grünes bzw. rotes Licht erfolgen. Optional kann das Signalelement 10 auch mit mehr Darstellungsfunktionen ausgestattet werden - beispielsweise indem es als Bildschirm ausgeführt wird - und für die Ausgabe weiterer Informationen dienen, typischerweise für Hintergrundinformationen die zu dem Produkt 2 in der Datenbank 9 hinterlegt sind und über die Steuerungs- und Kommunikationseinheit 7 empfangen wird. Wie weiter unten näher ausgeführt könnten diese Hintergrundinformationen ggf. auch an anderer Stelle erkannte Produktmängel oder Informationen zu einem Produktrückruf beinhalten.

Von erfindungsgemäß wesentlicher Bedeutung ist, dass der für die Echtheitsbestätigung am Ort des betroffenen Produktes 2 erforderliche Detektor 6 in dem Kühlschrank 1 angeordnet ist, in welchem das Produkt 2 ohnedies auf seinem Weg zum letztendlichen Verbrauch vorübergehend aufbewahrt wird. Besonders vorteilhaft ist es, wenn der Detektor 6 im Kühlschrank so angeordnet ist, dass er die Kennzeichnungen 3 schon dann detektieren kann, wenn die Produkte 2 wie üblich in den Kühlschrank gestellt werden, sodass also von Seiten von Personen kein separater Arbeitsschritt erforderlich ist.

Ein besonders hoher Wert der Erfindung ergibt sich dann, wenn Datenbank 9, in welcher Kennzeichnung 3 eines Produktes 2 zur Echtheitsüberprüfung genutzt wird, zusätzlich dazu genutzt wird weitere Daten zu dem Produkt zu speichern. Idealerweise betrifft die Kennzeichnung 3 genau ein einziges individuelles Produkt, also beispielsweise genau eine einzige Getränkedose und nicht alle Getränkedosen einer ganzen Produktionscharge oder gar alle Getränkedosen welche bestimmungsgemäß gleich ausgebildet und befüllt sein sollten. Beträchtliche Vorteile ergeben sich aber auch, wenn die in einer Kennzeichnung 3 dargestellte Information zwar nicht nur für ein einziges individuelles Produkt gilt, sondern beispielsweise für alle Produkte, welche der gleichen Produktionscharge zuzurechnen sind, sodass also angenommen werden kann, die einzelnen Prozessschritte sind für alle individuellen Produkte der betreffenden Produktionscharge "genau" gleich abgelaufen.

Am Beispiel dass jedes einzelne Stück der Produkte 2 jeweils eine individuellen Kennzeichnung 3 (gemäß Fig. 1) aufweist, kann die Datenbank 9 gemäß einer vorteilhaften Ausführung Datensätze aufweisen, welche immer genau ein einzelnes Produkt (also z.B. genau eine einzige Getränkedose) betreffen, wobei die Datensätze beispielsweise jeweils die folgenden Informationen beinhalten:
- Inhalt des offensichtlichen Kennzeichnungselementes 4
- Inhalt des verschlüsselten Kennzeichnungselementes 3
- Zeitpunkt, Anlagenidentifikation, wesentliche Betriebsparameter bei der Oberflächenbeschichtung an der Innenseite der Verpackung
- Zeitpunkt, Anlagenidentifikation, wesentliche Betriebsparameter bei der Oberflächenbeschichtung an der Außenseite der Verpackung
- Zeitpunkt, Anlagenidentifikation, wesentliche Betriebsparameter bei der Befüllung der Verpackung.
- Zeitpunkt, Anlagenidentifikation, wesentliche Betriebsparameter beim Verschluss der Verpackung
- Zeitpunkt, Anlagenidentifikation, wesentliche Betriebsparameter beim Pasteurisieren des Produktes
- Informationen über das Lagern (Ort, Zeitpunkt Einlagern, Auslagern, Untere Temperatur, oberste Temperatur, zeitlicher Mittelwert der Temperatur)
- Informationen über Vertriebszwischenstationen (wann, wo, Transportarten, ggf. Temperaturinformationen)
- Zeitpunkt des Einlagerns im erfindungsgemäßen Kühlschrank
- Informationen über den Betrieb des Kühlschranks (Untere Temperatur, oberste Temperatur, zeitlicher Mittelwert der Temperatur)
- Information über die Entnahme aus dem Kühlschrank

Wie für Datenbanken üblich, sind dann aus den hinterlegten Datensätzen jene Datensätze wahlweise herausfilterbar, bei denen in wählbaren Zeilen des Datensatzes die dort hinterlegten Werte innerhalb eines wählbaren Bereiches liegen.

Die gespeicherten Informationen ermöglichen nicht nur die schon beschriebene Echtheitsprüfung, sondern auch in Streitfällen, typischerweise im Fall von behaupteten Produktmängeln, einen verlässlichen Nachweis, ob bei Herstellung und Vertrieb des Produktes durchwegs hochqualitativ gearbeitet wurde.

Beispielsweise können dann, wenn an einem bei einem Endkunden angekommenen einzelnen Produkt ein Mangel festgestellt wird, jene Produkte identifiziert werden, welche im gleichen Zeitbereich mit gleichen Betriebsparametern produziert und vertrieben wurden. Wenn bei keinem dieser weiteren Produkte der gleiche Mangel oder ein Hinweis darauf zu entdecken ist, so ist dies ein starker Hinweis darauf, dass der Mangel am erstgenannten Produkt im Verantwortungsbereich des Endkunden entstanden ist und nicht im Verantwortungsbereich des Herstellers oder des Vertriebes.

Beispielsweise können aber auch dann, wenn dem Hersteller oder einem Zwischenhändler im Nachhinein bekannt wird, dass es in einem bestimmten Zeitfenster an einer bestimmten Verarbeitungsanlage oder in einer bestimmten Vertriebsstation Probleme gab, die betroffenen Produkte identifiziert werden, und zum großen Teil auch noch gefunden werden, da ja auch die Vertriebsstrukturen hinterlegt sind und damit die Orte an denen sich die betroffenen Produkte befinden eingegrenzt werden können. Spätestens wenn ein betroffenes Produkt in einem Kühlschrank 1, welcher Teil des erfindungsgemäßen Systems ist, erkannt wird, kann durch die Datenbank 9 dazu an die Steuereinheit 7 am Kühlschrank 1 eine Warnung gesendet werden. Entweder über die lokale Steuereinheit 7 oder über einen anderen mehr oder minder automatisiert arbeitenden Informationsweg kann auch Personal informiert werden damit dieses die Auslieferung dieses Produktes verhindert.

Gemäß Fig. 2 sind Produkte 2, welche Getränkegebinde sein können, auf einer durchsichtigen Regalfläche 11 eines erfindungsgemäßen Kühlschranks 1 angeordnet, wobei die Türseite des Kühlschranks rechts liegt. Unterhalb der Regalfläche 11 befindet sich der Detektor 6. Der Detektor 6 ist in diesem Fall ähnlich wie bei einem aus dem Bürobereich bekannten Flachbettscanner als Kameraleiste 12 und einem diese bewegenden Transportmechanismus 13 ausgebildet. Bestimmungsgemäß wird während der Bildaufnahme die Kameraleiste 12 durch den Transportmechanismus 13 einer zur Regalfläche 11 parallelen Ebene bewegt. Kennzeichnungsinformationen für die Produkte 2 sind gemäß diesem Beispiel auf der Bodenfläche der Produkte 2 angebracht. Typischerweise dann, wenn die Tür des Kühlschranks 1 geschlossen wurde, wird ein Scanvorgang der Sicht auf die durchsichtige Regalfläche 11 von unten her durchgeführt, d.h. das sich von unten her ergebende Bild der durchsichtigen Regalfläche 11 wird durch die Kameraleiste 12 aufgenommen. Bevorzugt in der Steuerungs- und Kommunikationseinheit 7 (Fig. 1) wird die Bildinformation soweit ausgewertet, dass Kennzeichnungen 3 (Fig. 1) der einzelnen Produkte 2 identifiziert und gelesen werden. Wie oben beschrieben wird die gelesene Information an die Datenbank 9 (Fig. 1) gesandt und eine Information zurückerhalten, welche die Echtheit der einzelnen Produkte 2 ggf. bestätigt. Spätestens, wenn die Kühlschranktür geöffnet wird, wird für das der Tür am nächsten befindliche Produkt 2 das Signalelement 10 eingeschaltet, sodass ggf. dessen Echtheit signalisiert wird bzw. im gegenteiligen Fall eine Warnung signalisiert wird. Es ist vorteilhaft, wenn die Regalfläche 11 mit einer der an sich bekannten Vorrichtungen (nicht eingezeichnet) versehen ist, welche die auf der Regalfläche 11 befindlichen Produkte 2 selbsttätig auf die Entnahmeseite der Regalfläche 11 hinschiebt.

Der Kühlschrank 1 kann auch Teil eines Verkaufsautomaten sein. Die Signalisierung durch das Signalelement 10 hat dann immer das aktuell auszugebende Produkt 2 zu betreffen.

Im Rahmen des Erfindungsgedankens gibt es viele Abwandlungen zu den skizzierten Darstellungen. Beispielhaft seien erwähnt:
Die Regalfläche braucht gar nicht über ihre ganze Tiefe durchsichtig zu sein, es reicht, wenn ihr türseitiger Bereich durchsichtig ist. Der Detektor braucht von unten her dann auch nur am türseitigen Bereich der Regalfläche Bilder aufzunehmen.

Um die Durchsichtigkeit der Regalfläche zu erreichen braucht diese nicht unbedingt aus einem durchsichtigen Material, wie z.B. Glas, zu bestehen. Die Regelfläche kann stattdessen auch aus einem grobmaschigen Gitter gebildet sein.

Der an der Unterseite einer Regalfläche angeordnete optische Detektor, welcher nach Art eines Flachbettscanners eine Kameraleiste und einen diese bewegenden Transportmechanismus aufweist, kann auch nach unten hin ausgerichtet sein, sodass er von oben her ein Bild jener Produkte erstellt, welche auf der nächstunteren Regalfläche stehen.

Die Produkte 2 können an ihrer Oberseite und an ihrer Unterseite mit jeweils einem Identifikationsmerkmal versehen sein, sodass Kennzeichnungsinformation zu einem Produkt im Kühlschrank 1 sowohl durch einen von oben her aufnehmenden Detektor 6 und durch einen von unten her aufnehmendem Detektor auslesbar ist. Damit kann beispielsweise erreicht werden, dass ein Produkt 2 auch dann richtig identifiziert werden kann, wenn eines der beiden Identifikationsmerkmale im Lauf des Hantierens beschädigt - beispielsweise zerkratzt oder überdeckt - wurde. Zusätzlich kann natürlich auch Fälschungssicherheit erhöht werden, beispielsweise indem für die oben angebrachte Information eine andere Darstellungsart bzw. Verschlüsselung als für die unten angebrachte Information verwendet wird. Der ggf. an der Unterseite einer Regalfläche angeordnete optische Detektor, welcher nach Art eines Flachbettscanners eine Kameraleiste und einen diese bewegenden Transportmechanismus aufweist, kann dazu passend zwei Kameraleisten aufweisen, wobei die eine nach unten hin gerichtet ist und die andere nach oben hin.

Wie aus dem Stand der Technik für Kühlschränke an sich bekannt, können auch feststehende Kameras sowie Kameras, die an der beweglichen Kühlschranktür angeordnet sind, als optische Detektoren verwendet werden.

Die anhand von Fig. 2 beschriebene Einbauweise eines optischen Detektors ist 6 für die erfindungsgemäße Anwendung besonders vorteilhaft, weil damit sehr gut definierte - nämlich bei genau definierten Lichtverhältnissen und bei gleichbleibendem geringem Abstand - Aufnahmen der Unterseite von Produktverpackungen möglich sind, womit auch fein codierte Informationen verlässlich gut auslesbar sind.

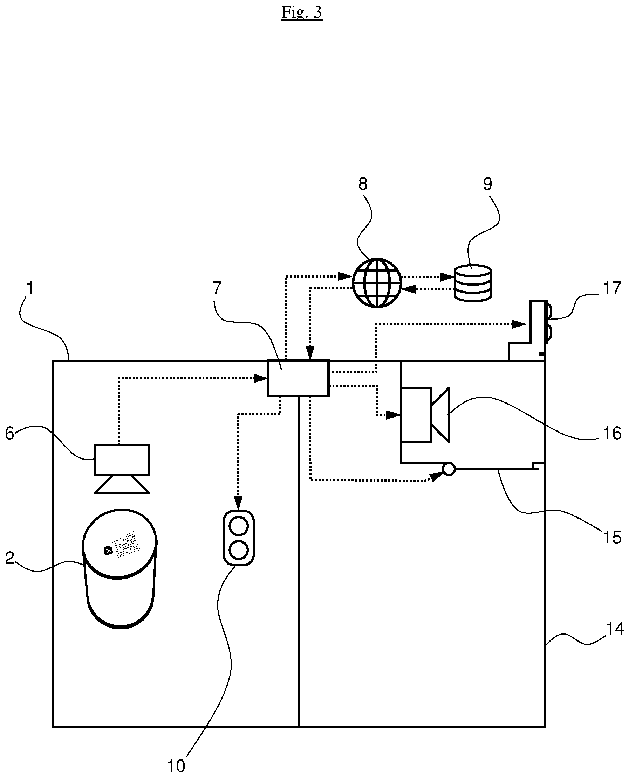

Fig. 3 zeigt ein Gerät, welches eine vorteilhafte Kombination aus einem erfindungsgemäßen Kühlschrank 1 und einer Vorrichtung 14 zur Rücknahme von Pfandverpackungen darstellt, wobei die Pfandverpackungen der Verpackungsteil von Produkten 2 sind, also wie die Produkte 2 auch eine Kennzeichnung 3 aufweisen.

Die Vorrichtung 14 zur Rücknahme von Pfandverpackungen umfasst einen Hohlraum zur Aufnahme der Pfandverpackungen sowie eine steuerbare Öffnung 15, durch welche hindurch gegebenenfalls eine Verpackung in den Hohlraum eingeworfen werden kann. Weiters umfasst die Vorrichtung 14 einen weiteren Detektor 16, welcher dem Detektieren von Kennzeichnungsinformation an rückzugebenden Pfandverpackungen dient. Weiters umfasst die Vorrichtung 14 auch eine Signal- und Bonausgabeeinheit 17.

Die Steuerungs- und Kommunikationseinheit 7 betreut an lokalen Elementen in diesem Fall nicht nur die im Kühlschrank 1 vorhandenen Elemente Detektor 6 und Signalelement 10, sondern auch die zur Vorrichtung 14 zur Rücknahme von Pfandverpackungen gehörenden Elemente Detektor 16, steuerbare Öffnung 15 und Bonausgabeeinheit 17.

Wenn ein mutmaßliches Pfandgebinde mit der Seite seiner Kennzeichnung voran an den Detektor 16 gehalten wird, so wird die Kennzeichnung detektiert und die relevante Information über die Steuerungs- und Kommunikationseinheit 7 und das Informationsnetzwerk 8 an die Datenbank 9 gesandt. Dort wird - wie zuvor für Produkte 2 beschrieben - überprüft, ob das Pfandgebinde echt ist, und zusätzlich, ob dafür noch kein Pfand ausbezahlt wurde. Das Ergebnis der Prüfung wird an die Steuerungs- und Kommunikationseinheit 7 zurückgemeldet. Wenn beide Fragestellungen mit 'Ja' beantwortet sind, wird durch die Steuerungs- und Kommunikationseinheit 7 die steuerbare Öffnung 15 in den Hohlraum geöffnet, sodass das Gebinde in den Hohlraum fällt und die Signal- und Bonusausgabeeinheit 17 wird dazu angewiesen zu signalisieren, dass die Rückgabe geklappt hat, und einen entsprechenden Bon auszugeben. (Das Ausgeben eines Bons braucht nicht unbedingt in Papierform zu geschehen, es kann auch auf digitalem Weg durch Schreiben einer Gutschrift auf ein Konto erfolgen.) Wenn zumindest eine der besagten Fragestellungen durch die Datenbank 9 mit 'Nein' beantwortet wurde, werden die Annahme des Pfandgebindes und das Ausgeben eines Bons verweigert.

Im positiven Fall wird in der Datenbank 9 hinterlegt, dass das Pfandgebinde abgegeben und eine Bonausgabe dazu angewiesen wurde. Durch diese hinterlegte Information kann verhindert werden, dass für die gleiche Verpackung mehrmals Rückgabepfand ausgegeben wird. Gemäß einer vorteilhaften Weiterentwicklung der Erfindung werden die im Kühlschrank 1 erfindungsgemäß verwendeten Detektoren 6 und die Steuerungs- und Kommunikationseinheit 7 sowie das Informationsnetzwerk 8 zusätzlich zu den beschriebenen erfindungsgemäßen Verwendungen auch dazu verwendet, berechtigte Benutzer des Kühlschranks 1 mit Informationen über den Inhalt des Kühlschranks 1 zu informieren - wie dies Eingangs als Stand der Technik beschrieben wurde.

Gemäß einer vorteilhaften Variation der Erfindung ist der erfindungsgemäß verwendete Kühlschrank Teil eines Verkaufsautomaten. Demgemäß ist eine Vorrichtung für das Bezahlen von Ware und eine Ausgabevorrichtung für im Kühlschrank enthaltene Produkte vorhanden, welche so zusammenwirken, dass dann, wenn ein Produkt bezahlt wurde, dieses automatisch ausgegeben wird. Vor oder während des Ausgebens kann das Produkt wie beschrieben auf Echtheit geprüft werden. Sofern das System wie an Hand von Fig. 3 beschrieben auch eine Vorrichtung zur Rücknahme von Pfandverpackungen umfasst, kann bei der Bezahlung von zu entnehmenden Produkten auch der durch die Rückgabe von Pfandgebinden erstandene Betrag abgerechnet werden.

Gemäß einer Weiterentwicklung dazu umfasst das System auch einen Detektor für das Erkennen von registrierten Kunden beispielsweise an Hand einer Kundenkarte oder eines Identifikationsroutine die unter Austausch von Funksignalen zwischen dem Detektor und dem Smartphone des Kunden abläuft. Dann können Produktkäufe und Rückgaben von Pfandgebinden individuellen Kunden zugeordnet werden und auch einzelnen Kunden individuell zugeordnete Bedingungen für Produktkosten, Bezahlungsarten, Bonusse etc. berücksichtigt werden. Die als geordnete Sammlung von digitalen Datensätzen ausgebildeten Kundenkonten können beispielsweise ebenfalls in der Datenbank 9 angesiedelt sein und die Datenübertragung erfolgt idealerweise ebenfalls über die Steuerungs- und Kommunikationseinheit (7) und das damit verbundene Informationsnetzwerk (8) (Fig. 1, Fig. 3).

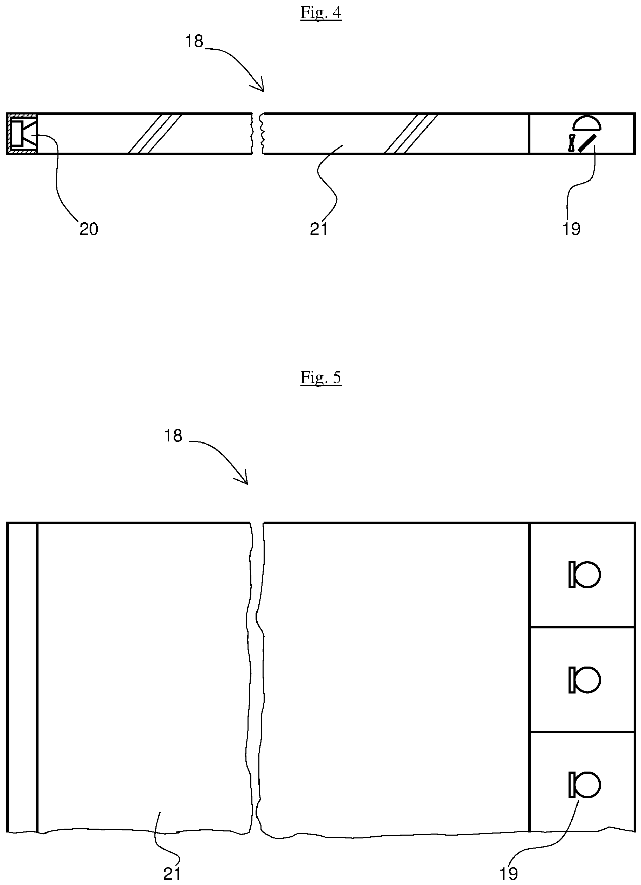

Fig. 4 und Fig. 5 veranschaulichen eine erfindungsgemäß verwendbare Regalfläche 18, in welcher eine Reihe von Optikbaugruppen 19, eine Reihe von Detektoren 20 und ein dazwischenliegender Lichtübertragungsbereich 21 zu einer brettartigen Struktur idealerweise flächenbündig zusammengefasst sind, sodass sie eine Fläche bilden, auf welche Produkte 2 (gemäß den vorigen Zeichnungen) gestellt werden können.

Eine Optikbaugruppe 19 umfasst Linsen, und/oder Spiegel/ und/oder lichtdurchlässige Prismen, welche in ein lichtleitendes, schützendes Medium eingebettet sind. Ihr Zweck ist es, von der Oberseite der Regalfläche 18 kommendes Licht zu bündeln und in ein Strahlenbündel umzulenken, welches im Wesentlichen parallel zur Regalfläche, von der Entnahmeseite des Kühlschranks weg gerichtet ist. Das Strahlenbündel durchdringt dann den Lichtübertragungsbereich 21, welcher einfach durch eine ebene Glasplatte gebildet sein kann, und gelangt letztendlich an die Detektoren 20, welche typischerweise kleine Kameras sind und an der den Optikbaugruppen 19 gegenüberliegenden Seite der Regalfläche 18 in einer Reihe nebeneinander angeordnet sind. Bestimmungsgemäß werden auf die Regalfläche Produkte 2 gestellt, und ein entnahmeseitig befindliches Produkt 2 steht genau auf einer Optikbaugruppe 19, sodass durch diese die Unterseite des Produktes 2 aufgenommen wird. Es ist vorteilhaft, in der Reihe von Detektoren 20 auch eine oder mehrere Lichtquellen anzuordnen, Licht über den Lichtübertragungsbereich 21 und die Optikbaugruppen 19 ggf. an die Unterseite der auf diesen stehenden Produkte senden.

Regalflächen 18 gemäß Fig. 4 und 5 und auch die nachfolgenden besprochenen Abwandlungen dazu sind optisch schön und durch ihre Anwendung kann ein herkömmlicher Kühlschrank recht einfach zu einem Kühlschrank mit Datenerfassung bezüglich der Produkte 2 aufgerüstet werden - auch dann wenn der Kühlschrank nicht zur Echtheitsprüfung der Produkte 2 gemäß der vorliegenden Erfindung oder zur Erfassung von Vertriebsdaten bezüglich der Produkte verwendet wird.

Zur besprochenen Bauweise gemäß Fig. 4 und Fig. 5 seien kurz an verwandten Bauweisen erwähnt:
- Die Lichtübertragung von einer Optikbaugruppe 19 zu einem Detektor 20 kann auch über faserförmige Lichtleiter erfolgen, welche in oder an einem flächigen, mechanisch tragenden Regalbereich angeordnet sind.
- Ein optischer Detektor 20 kann auch direkt in einer Optikbaugruppe 19 integriert sein, und damit auch unterhalb des jeweils aufgenommen Produktes angeordnet sein. Bevorzugt an der Unterseite der restlichen Regalfläche ist dann eine Verkabelung für die Energieversorgung und die Datenübertragung anzubringen.

## Patentansprüche

1. System für die Echtheitsprüfung eines Produktes (2), gemäß welchem das Produkt (2) mit einer Kennzeichnung (3) versehen ist, deren Information durch einen Detektor (6, 16, 20) ausgelesen wird und über eine Steuerungs- und Kommunikationseinheit (7), welche den Detektor (6, 16, 20) und ein Signalelement (10) steuert, und ein mit der Steuerungs- und Kommunikationseinheit (7) verbundenes Informationsnetzwerk (8) an eine Datenbank (9) gesandt wird und mit dort hinterlegten Informationen abgeglichen wird, wobei als ein Ergebnis des Abgleichs eine Entscheidung bezüglich Echtheit oder Unechtheit des Produktes (2) generiert wird und das Ergebnis dieser Entscheidung am Ort es Produktes (2) durch das Signalelement (10) signalisiert wird,
**dadurch gekennzeichnet, dass**
das Produkt (2) ein verpacktes Lebensmittel ist und, dass der Detektor (6) in einem Kühlschrank (1) angeordnet ist, in welchem das Produkt (2) platziert ist.

2. System nach Anspruch 1, **dadurch gekennzeichnet, dass** in der Datenbank (9) vermerkt wird, von welcher Steuerungs- und Kommunikationseinheit (7), wann welche Informationen aus Kennzeichnungen (3) übersandt wurden.

3. System nach Anspruch 1 oder 2, **dadurch gekennzeichnet, dass** der Kühlschrank (1) eine durchsichtige Regalfläche (11) aufweist, und dass der Detektor (6) ein optischer Detektor ist, und von der Unterseite her, durch die Regalfläche hindurch Bilder der auf der Regalfläche (11) befindlichen Produkte (2) aufnimmt.

4. System nach einem der Ansprüche 1 bis 3, **dadurch gekennzeichnet, dass** der Detektor (6) eine Kameraleiste (12), welche unterhalb einer Regalfläche (11) angeordnet ist, und durch einen Transportmechanismus (13) umfasst, im Wesentlichen parallel zur Ebene der Regalfläche bewegbar ist.

5. System nach Anspruch 1 oder 2, **dadurch gekennzeichnet, dass** der Kühlschrank eine Regalfläche (18) aufweist, in welche der als optischer Detektor ausgebildete Detektor (20) flächenbündig integriert ist.

6. System nach Anspruch 5, **dadurch gekennzeichnet, dass** in die Regalfläche (19) eine Optikbaugruppe (19) flächenbündig integriert ist, welche Licht von der Oberseite der Regalfläche (19) an den Detektor (20) lenkt.

7. System nach Anspruch 6, **dadurch gekennzeichnet, dass** die Lichtübertragung zwischen er Optikbaugruppe (19) und dem Detektor (20) über einen lichtleitenden Festkörper erfolgt.

8. System nach einem der Ansprüche 1 bis 7, **dadurch gekennzeichnet, dass** Detektor (6, 16, 20), Steuerungs- und Kommunikationseinheit (7) und Informationsnetzwerk (8) auch dazu verwendet werden, berechtigte Benutzer des Kühlschranks (1) mit Informationen über den Inhalt des Kühlschranks (1) zu versorgen.

9. System nach einem der Ansprüche 1 bis 8, **dadurch gekennzeichnet, dass** das Informationsnetzwerk (8) das Internet ist.

10. System nach einem der Ansprüche 1 bis 9, **dadurch gekennzeichnet, dass** der Kühlschrank (1) mit einer Vorrichtung (14) zur Rücknahme von Pfandverpackungen kombiniert ist, wobei die Pfandverpackungen der mit der Kennzeichnung (3) versehene Verpackungsteil von Produkten (2) sind, wobei die Vorrichtung (14) einen Detektor (16) umfasst, welcher die Kennzeichnung ausliest und über eine Steuerungs- und Kommunikationseinheit (7), welche den Detektor (6, 16) und ein Signalelement (10) steuert, und diese über die Steuerungs- und Kommunikationseinheit (7) und das Informationsnetzwerk (8) an die Datenbank (9) gesandt wird und durch Abgleich von Daten die in der Datenbank (9) hinterlegt sind, eine Entscheidung generiert wird, ob die Pfandverpackungen echt ist und ob dafür nicht schon früher Pfand ausbezahlt wurde.

11. System nach einem der Ansprüche 1 bis 10, **dadurch gekennzeichnet, dass** in der Datenbank (9) Datensätze generiert werden, welche zu den mit individuellen Kennzeichnungen (3) gekennzeichneten Produkten (2) Daten bezüglich Herstellungsparametern enthalten.

12. System nach einem der Ansprüche 1 bis 11, **dadurch gekennzeichnet, dass** in der Datenbank (9) Datensätze generiert werden, welche zu den mit individuellen Kennzeichnungen (3) gekennzeichneten Produkten (2) Daten bezüglich einzelner Herstellungsschritte enthalten.

13. System nach einem der Ansprüche 1 bis 12, **dadurch gekennzeichnet, dass** in der Datenbank (9) Datensätze generiert werden, welche zu den mit individuellen Kennzeichnungen (3) gekennzeichneten Produkten (2) Daten bezüglich des Vertriebsweges enthalten.

14. System nach Anspruch 12 oder 13, **dadurch gekennzeichnet, dass** nach der Identifizierung eines Produktes (2) in einem Kühlschrank (1) anhand der Kennzeichnung (3) und der Erfüllung von in der Datenbank (9) hinterlegten Filterbedingungen durch die Datenbank (9) eine Warnung vor der Verwendung des Produktes (2) und/oder eine Produkt-Rückrufinformation das Produkt (2) betreffend generierbar und an die Steuerungs- und Kommunikationseinheit (7) im Kühlschrank (1) sendbar ist.

15. System nach einem der Ansprüche 1 bis 14, **dadurch gekennzeichnet, dass** der Kühlschrank (1) Teil eines Verkaufsautomaten ist.

16. System nach Anspruch 15, **dadurch gekennzeichnet, dass** im Bereich des Kühlschranks (1) ein Detektor für das Erkennen von registrierten Kunden vorhanden ist, dass Produktkäufe und ggf. Pfandrückgaben den jeweiligen Konten von jeweils erkannten Kunden zugordnet werden, und dass der Informationsaustausch zwischen einer Datenbank welche die Kundenkontenkonten enthält, und dem Detektor für das Erkennen von registrierten Kunden, über die Steuerungs- und Kommunikationseinheit (7) und das damit verbundene Informationsnetzwerk (8) erfolgt.

17. System nach einem der Ansprüche 1 bis 16, **dadurch gekennzeichnet, dass** die Kennzeichnung (3) am Produkt (2) sowohl an dessen oberen Seite als auch an dessen unterer Seite angebracht ist, und im Kühlschrank (1) jede der beiden Kennzeichnungen (3) auslesbar ist.
